# EUROPÄISCHE PATENTANMELDUNG

(11) **EP 0 704 485 A2**
(43) Veröffentlichungstag der Anmeldung: **03.04.1996**
(21) Anmeldenummer: 95114691.9
(22) Anmeldetag: 19.09.1995
(51) Int. Cl.: C08L 61/28, C08L 61/30, C08G 12/34, C08G 12/46, D21H 17/51

(54) **Mit alkoxilierten Polyamiden modifizierte Melamin-Tränkharze**

(30) Priorität: 28.09.1994 DE 4434605
(71) Anmelder: BASF AKTIENGESELLSCHAFT, D-67056 Ludwigshafen (DE)
(72) Erfinder: Kirchgässner, Uwe, Dr., D-67227 Frankenthal (DE); Jäckh, Christof, Dr., D-69120 Heidelberg (DE); Decher, Jakob, D-67240 Bobenheim-Roxheim (DE); Wittmann, Otto, D-67227 Frankenthal (DE); Niessner, Manfred, Dr., D-67105 Schifferstadt (DE)

(57) **Zusammenfassung**

Wäßrige Tränkharze, enthaltend
(A) ein Kondensationsprodukt aus Melamin, Formaldehyd und gegebenenfalls Harnstoff, und
(B) ein alkoxiliertes Polyamid.

Die Tränkharze eignen sich zur Herstellung von imprägnierten Papieren für die Oberflächenbeschichtung.

## Beschreibung

Wäßrige Tränkharze, enthaltend
(A) ein Kondensationsprodukt aus
   (A₁) 1 mol Melamin,
   (A₂) 1,3 bis 2,5 mol Formaldehyd
   (A₃) 0 bis 0,1 mol Harnstoff,
und
(B) 0,1 bis 20 Gew.-%, bezogen auf die Menge der Komponenten (A₁), (A₂) und (A₃), eines wasserlöslichen oder wasserdispergierbaren alkoxilierten Polyamids.

Weiterhin betrifft die Erfindung Papiere, die mit solchen Tränkharzen imprägniert sind sowie die Verwendung solcher Papiere zur Herstellung von Schichtpreßstoffen.

Zur Herstellung von Möbelteilen und Arbeitsplatten verwendet man üblicherweise Holzwerkstoffe, insbesondere Spanplatten, die mit aminoharzimprägnierten Papieren beschichtet sind. Die Imprägnierung verleiht der Möbeloberfläche die notwendige Härte, Chemikalienbeständigkeit sowie Hitze- und Feuerwiderstandsfähigkeit.

In der Holzveredelungsindustrie besteht das Bestreben, die Härtungszeiten von Melamintränkharzen durch reaktivere Härtungssubstanzen und erhöhte Verarbeitungstemperaturen immer mehr zu verkürzen. Dadurch besteht die Gefahr, daß die beschichteten Holzwerkstoffe überhärtet werden und zur nachträglichen Rißanfälligkeit neigen.

Aminoharzlösungen, insbesondere Melamin-Formaldehyd-Tränkharzlösungen, mit elastischen Eigenschaften spielen daher nach den heutigen Marktanforderungen eine sehr wichtige Rolle. Gerade zur Herstellung von rißfreien Dekorfilmbeschichtungen werden hochelastifizierte Melamin-Formaldehyd-Harze bei der Papierimprägnierung benötigt, um auch nach Anbohren der beschichteten Oberfläche keine Bohrlochrisse zu erhalten. Weiterhin sind elastifizierte Melamin-Formaldehydharze für die Herstellung von nachformbaren Laminaten von Bedeutung.

Verwendet man zum Imprägnieren der Papierbahnen mit Polyolen bzw. Glykolen modifizierte Melaminharze, so erhält man relativ matte, feuchtigkeitsempfindliche Oberflächen; außerdem werden große Mengen dieser Modifizierungsmittel benötigt, um den gewünschten Elastifizierungsgrad zu erreichen (Rißfreiheit bei KT-Beschichtung; Nachformbarkeit bei Laminaten). Da Modifizierungsmittel unter den gängigen Herstellbedingungen für Melaminharze nicht oder kaum ins Harzgerüst eingebaut werden, haben sie den weiteren Nachteil, bei der Harzverarbeitung einen beträchtlichen Beitrag zu organisch C-Emission zu liefern. Außerdem werden diese Modifizierungsmittel beim nachträglichen Aushärtungsvorgang, d.h. während des Verpressens des harzimprägnierten Papieres mit der Spanplatte, ebenfalls nicht chemisch eingebaut, so daß deutliche Nachteile in den Oberflächeneigenschaften, speziell bezüglich der Feuchtigkeitsempfindlichkeit, in Kauf genommen werden müssen.

In der DE-A 4127615 ist die Verwendung von Polyharnstoffen zur Elastifizierung von Aminoplastharzen beschrieben.

Weiterhin ist aus der EP-A 106 049 und der EP-A 166 297 bekannt, Melamin-Formaldehyd-Harze mit Hydroxyalkylmelaminen zu modifizieren.

Die Herstellung von alkoxilierten Polyamiden ist aus der DE-PS 907 701 und der DE-PS 913 957 bekannt.

Aus der DE-PS 912 926 ist bekannt, Faserstoffe wie Textilien, Papier oder Leder mit wasserdispergierbaren alkoxilierten Polyamiden zu veredeln.

Mit bisher bekannten elastifizierten Melamin-Formaldehyd-Harzen hergestellte Oberflächenbeschichtungen weisen aber noch einige Nachteile bezüglich der Elastizität und Beständigkeit gegen Umwelteinflüsse auf.

Aufgabe der vorliegenden Erfindung war es Harze zu finden, die einen hohen Elastifizierungsgrad und gute Beständigkeit gegen mechanische und chemische Einflüsse aufweisen bei gleichzeitiger geringer Emission flüchtiger organischer Verbindungen.

Demgemäß wurden die eingangs definierten Tränkharze gefunden.

Die erfindungsgemäßen wäßrigen Tränkharze enthalten als Komponente A). Kondensationsprodukte aus
(A₁) 1 mol Melamin,
(A₂) 1,3 bis 2,5 mol Formaldehyd und
(A₃) 0 bis 0,1 mol Harnstoff.

Die Herstellung der wäßrigen Kondensationsharze erfolgt unter an sich bekannten Bedingungen durch Kondensation im basischen Milieu bei pH-Werten von 8 bis 10 und Temperaturen von 80 bis 100°C. Der Reaktionsdruck ist in der Regel unkritisch. Man arbeitet im allgemeinen bei Normaldruck.

Den Endpunkt der Kondensationsreaktion bestimmt man üblicherweise über die Trübungstemperatur. Hierzu wird 1 g des Reaktionsgemisches mit der fünffachen Menge an Wasser versetzt und die Temperatur gemessen, bei der eine bleibende Trübung dieser Mischung auftritt. Üblicherweise kondensiert man bis zu Trübungstemperaturen von 40 bis 60°C.

Man kann auch Mischkondensate mit Harnstoff verwenden, bei denen bis zu 10 mol.-% des Melamins durch Harnstoff ersetzt wird. Die Herstellung solcher Mischkondensate ist bekannt. Sie erfolgt üblicherweise bei pH-Werten von 8 bis 10 und Temperaturen im Bereich von 70 bis 100°C.

Die so erhaltenen wäßrigen Kondensationsharze weisen im allgemeinen Feststoffgehalte von 40 bis 70 Gew.-% auf. Als Feststoffgehalt wird hier der Trockenrückstand bezeichnet, der ermittelt wird, indem 1 g wäßriges Harz zwei Stunden im Trockenschrank bei 120°C getrocknet wird.

Als Elastifizierungskomponenten (Komponenten (B)) werden erfindungsgemäß alkoxilierte Polyamide eingesetzt.

Geeignete Komponenten (B) sind solche, die durch einen ausreichend hohen Alkoxilierungsgrad wasserdispergierbar oder, vorzugsweise, wasserlöslich sind.

Die Alkoxilierung der Polyamide kann die üblicherweise durch Erhitzen der Polyamide in einem Überschuß von einem oder mehreren Alkylenoxiden mit 2 bis 4 C-Atomen, vorzugsweise Ethylenoxid oder Propylenoxid, in geschlossenen Gefäßen oder durch Einleiten der Alkylenoxide in Polyamidschmelzen oder Lösungen von Polyamiden in organischen Lösungsmitteln durchgeführt werden. Die Umsetzung erfolgt üblicherweise bei Temperaturen zwischen 80 und 150°C (siehe Houben-Weyl, "Methoden der Organischen Chemie", Band E 20/Teil 2, Makromolekulare Chemie, 4. Auflage, Georg Thieme Verlag, Stuttgart, New York, 1987). Verwendet man Polyamidschmelzen, so kommen, in Abhängigkeit von der jeweiligen Schmelztemperatur, auch höhere Temperaturen in Betracht. Es ist auch möglich, Polyamide in fester Form bei Temperaturen von 80 bis 120°C und Alkylenoxid-Drücken von 5 bis 10 bar zu alkoxilieren.

Als zugrundeliegende Polyamid-Komponenten eignen sich vor allem solche mit mittleren Molekulargewichten Mₙ zwischen 2000 und 45000, bevorzugt 5000 bis 20000.

Geeignete Polyamide sind beispielsweise Polyamide vom AB-Typ, die aus Aminocarbonsäuren oder deren Lactamen erhältlich sind, so zum Beispiel Polyamide aus ω-Aminoalkansäuren wie 6-Aminohexansäure oder ε-Caprolactam (Polyamid 6), 7-Aminoheptansäure (Polyamid 7), 9-Aminononansäure (Polyamid 9) oder 11-Aminoundecansäure (Polyamid 11).

Geeignete Polyamide sind auch solche vom AA/BB-Typ, die aus ω,ω'-Diaminen und Dicarbonsäuren erhältlich sind, beispielsweise aus gesättigten Diaminen wie Tetramethylendiaminen, Pentamethylendiamin, Hexamethylendiamin oder höhermolekularen Diaminen oder deren Gemischen und Dicarbonsäuren wie Glutarsäure, Adipinsäure, Pimelinsäure, Sebacinsäure, höher molekulare Dicarbonsäuren oder Gemischen solcher Dicarbonsäuren hergestellt werden.

Die Herstellung solcher Polyamide ist allgemein bekannt.

Die alkoxilierten Polyamide werden erfindungsgemäß bevorzugt in Form wäßriger Lösungen oder wäßriger Dispersionen mit Gehalten an alkoxiliertem Polyamid von 10 bis 60, vorzugsweise 25 bis 50 Gew.-% verwendet.

Bevorzugt werden die alkoxilierten Polyamide bereits zu Beginn der Kondensation der Harzkomponente (A) zugesetzt. Man kann die alkoxilierten Polyamide aber auch während der Kondensation oder nach Beendigung der Kondensation zusetzen. Weiterhin kann die Komponente (B) auch erst beim Ansetzen der Imprägnierflotte zugegeben werden.

Die erfindungsgemäßen Tränkharze enthalten die alkoxilierten Polyamide (B) in Mengen von 0,1 bis 20 Gew.-%, bezogen auf die Summe der Mengen an eingesetztem Melamin, Formaldehyd und gegebenenfalls Harnstoff (Komponenten (A₁), (A₂) und (A₃)). Für den Anwendungsbereich Kurztakt-Beschichtungen sind Mengen von 1 bis 10 Gew.-% an (B), bei der Herstellung nachformbarer Laminate 5 bis 15 Gew.-% an (B) bevorzugt.

Gewünschtenfalls können auch übliche Modifizierungsmittel wie Diethylenglykol mitverwendet werden.

Die erfindungsgemäßen Tränkharzlösungen weisen Feststoffgehalte im Bereich von 40 bis 70 Gew.-%, bevorzugt 45 bis 65 Gew.-%, auf.

Zur Anwendung als Imprägnierflotten werden die Tränkharzlösungen üblicherweise mit Härtern versetzt. Als Härter kommen beispielsweise Maleinsäure, Ammoniumsulfit, Ethanolaminhydrochlorid, Dimethylethanolammoniumsulfit sowie Härterkombinationen wie Morpholin/p-Toluolsulfonsäure, N-Methylethanolamin/SO₂ oder N-Methylethanolamin/Ethanolamin/SO₂ in Betracht.

Mit den in den nachstehenden Beispielen hergestellten Tränkharzen wurden Kurztaktfilmbeschichtungen sowie Schichtpreßstoffe hergestellt, die mit den folgenden Prüfmethoden auf ihre anwendungstechnischen Eigenschaften untersucht wurden.

### Oberflächenprüfung:

### I) Rißempfindlichkeit (Bohrlochrisse)

Zwei harzimprägnierte Papierfilme werden bei 170°C innerhalb von 6 min unter Rückkühlung auf eine Spanplatte aufgepreßt. Die so beschichtete Oberfläche wird bei 80°C 12 h getempert und danach auf Rißbildung geprüft. Die Oberfläche wird dann mehrmals an unterschiedlichen Stellen angebohrt, nochmals bei 80°C 12 h getempert und dann auf Bohrlochrisse überprüft. Beurteilung in einer Skala von 0-6:
0 keine Risse
1 vereinzelte Risse
2 wenige Risse
3 mäßige Risse
4 häufige Risse
5 viele Risse
6 totale Rißbildung

### II) Kochtest

Der Probekörper wird 2 h lang mit kochendem Wasser behandelt. Anschließend wird der Probekörper 5 min in kaltes Wasser gelegt, dann herausgenommen, abgetrocknet und auf sichtbare Veränderungen der Oberfläche und des Gefüges untersucht (Blasenbildung etc.).

### III) Härtungsprüfung

Bei der Härtungsprüfung wird die Resistenz gegen folgende Chemikalien getestet:
1.) 0,004 % Rhodamin B in 0,2 n HCL
2.) 1 n HCL
3.) 1 n NaOH

Drei zusammenhängende Gläschen werden mit den angegebenen Reagenzien ca. 2/3 gefüllt und mit der Öffnung auf die Laminatoberfläche gestellt. Die Chemikalien bleiben ca. 16 h auf der Oberfläche und werden dann abgewaschen. Der Angriff der Chemikalien auf die Oberfläche wird in einer Skala von 0 bis 6 eingestuft.
0 kein Angriff
1 schwache Anfärbung
2 deutliche Anfärbung
3 starke Anfärbung
4 starke Anfärbung mit leichter Quellung
5 starke Anfärbung mit starker Quellung
6 aufgeweichte Oberfläche

### IV) Nachformbarkeit von Laminaten

Zur Prüfung der Nachformbarkeit wurde der nach den angegebenen Maßen aus dem Laminat ausgeschnittene Prüfkörper (165 x 90 mm) in eine Biegebank nach DIN 53 799 eingespannt. Die Biegestelle wurde auf 140°C aufgeheizt und dann um einen Radium von 6 mm gebogen. Die Nachformbarkeit wird nach folgenden Kriterien beurteilt:
Note 1 Einwandfreie Biegung ohne Riß
Note 2 Gebogen, aber kleiner Riß (< 1 cm)
Note 3 Gebogen, aber Riß (> 1 cm)
Note 4 Abgeknickt
Note 5 Laminat durchgebrochen

In den nachstehenden Beispielen wurde als alkoxiliertes Polyamid (Komponente B) ein ethoxiliertes Polycaprolactam eingesetzt, welches durch Umsetzung eines Polycaprolactam mit einem mittleren Molekulargewicht von 17000 mit Ethylenoxid in einer Menge von 10 Äquivalenten Ethylenoxid pro Caprolactameinheit erhalten wurde. Das ethoxilierte Polycaprolactam wurde in Form einer 25 gew.-%igen wäßrigen Lösung eingesetzt.

### V) Wasserdampftest

Ca. 200 ml Wasser werden in dem Erlenmeyer-Kolben zum Sieden gebracht (Siedesteine). Die zu prüfende Probe wird mit der Dekorseite nach unten auf dem Erlenmeyer aufgebracht und gegen die Hitzeflamme durch den Asbest- und Alu-Ring abgeschirmt. Die Probe wird eine Stunde dem Dampf ausgesetzt und anschließend mit einem Handtuch abgerieben.

Es wird geprüft, ob Veränderungen in der Fläche (Blasen, Glanzverlust) aufgetreten sind. Der Glanzverlust kann visuell oder mit Hilfe des Glanzprüfgerätes bestimmt werden.

### Beispiele

### Herstellung der Tränkharzlösungen

### Beispiel 1

Eine Mischung aus 1137 g 40 gew.-%igen wäßrigen Formaldehyd, 430 g Wasser und 239 g einer 25 gew.-%igen wäßrigen Lösung eines ethoxilierten Polycaprolactams wurde auf 30°C temperiert. Mit 2 n wäßriger Natronlauge wurde ein pH-Wert von 9 eingestellt und dann 1273,5 g Melamin zugegeben. Die Reaktionsmischung wurde auf 98-100°C erhitzt, wobei der pH-Wert langsam abfiel und 120 min bei pH 8,6 - 8,8 gerührt. Sobald eine Probe des Reaktionsgemisches eine Trübungstemperatur von 50°C aufwies, wurde die klare Harzlösung sofort auf Raumtemperatur abgekühlt und der pH-Wert mit 2 n wäßriger Natronlauge auf einen Wert von 10 eingestellt.
Viskosität: 120 mPa·s (20°C)
Feststoffgehalt: 56 Gew.-%

### Beispiel 2

Die Herstellung erfolgte analog Beispiel 1, jedoch wurden 417 g einer 25 gew.-%igen wäßrigen Lösung des ethoxilierten Polycaprolactams eingesetzt.
Viskosität: 190 mPa·s (20°C)
Feststoffgehalt: 57,5 Gew.-%

### Beispiel 3

Die Herstellung erfolgte analog Beispiel 1, jedoch wurden 498 g der Polycaprolactamlösung eingesetzt.
Viskosität: 250 mPa·s (20°C)
Feststoffgehalt: 59 Gew.-%

### Beispiel 4

Eine Mischung aus 1137 g 40 gew.-%igem wäßrigen Formaldehyd und 625 g Wasser wurde auf 30°C temperiert und mit 2 n wäßriger Natronlauge auf einem pH-Wert von 9 eingestellt und dann 1273,5 g Melamin zugegeben. Die Reaktionsmischung wurde anschließend auf 98-100°C erhitzt und etwa 120 min bei pH 8,6-8,8 gerührt. Sobald eine Probe des Reaktionsgemischs eine Trübungstemperatur von 50°C aufwies, wurde die klare Reaktionslösung sofort auf Raumtemperatur abgekühlt. Dabei wurde in der Abkühlphase bei 70 - 80°C 239 g einer 25 gew.-%igen wäßrigen Lösung eines ethoxilierten Polycaprolactams zugegeben. Der pH-Wert der Tränkharzlösung wurde mit 2 n wäßriger Natronlauge auf einen Wert von 10 eingestellt.
Viskosität: 80 mPa·s (20°C)
Feststoffgehalt: 56 Gew.-%

### Vergleichsbeispiel 1

Analog Beispiel 4 wurde eine Harzlösung hergestellt, jedoch wurde kein ethoxiliertes Caprolactam zugegeben.
Viskosität: 60 mPa·s (20°C)
Feststoffgehalt: 56 Gew.-%

### Vergleichsbeispiel 2

Analog Beispiel 4 wurde eine Harzlösung hergestellt, jedoch ohne Zugabe des ethoxilierten Caprolactams. Stattdessen wurden in der Abkühlphase bei 30°C jeweils 4 Gew.-%, bezogen auf die Summe der Melamin- und Formaldehydmenge, der Modifizierungsmittel Diethylenglykol, Caprolactam und Sorbit hinzugefügt.
Viskosität: 80 mPa·s (20°C)
Feststoffgehalt: 59,5 Gew.-%
Die so erhaltenen Tränkharzlösungen wurden wie im Folgenden geschildert verarbeitet und die entstehenden Produkte auf ihre anwendungstechnischen Eigenschaften geprüft.

### Kurztakt-Filmbeschichtung

### Herstellung der Imprägnierflotten

Zur Herstellung der Imprägnierflotten wurden die Harzlösungen jeweils mit Wasser auf einen Feststoffgehalt von 55 Gew.-% eingestellt, mit 0,3 Gew.-%, bezogen auf die Harzlösung, eines handelsüblichen Alkylphenolethoxylat-Netzmittels versetzt. Mit einer 85 gew.-%igen wäßrigen Lösung von N-Methylethanolamin/Ethanolamin/SO₂ als Härter wurden jeweils Imprägnierflotten mit einer Trübungszeit von 4 min und 5 min eingestellt.

### Imprägnierung und Beschichtung

Mit den so hergestellten Imprägnierflotten wurden weiße Dekorpapiere mit einem Flächengewicht von 80 g/m² imprägniert, wobei der Harzauftrag 120 Gew.-% betrug und der Restfeuchte-Gehalt auf 6,5 Gew.-% eingestellt wurde. Die so hergestellten Dekorfilme wurden nach dem Kurztaktverfahren bei 190°C und 20 bar innerhalb von 35 s auf übliche beschichtungsfähige Spanplatten gepreßt.

### Ergebnisse der Oberflächenprüfung:

**Tabelle I**

| | Harz n. Bsp. 1 | | Harz n. Bsp. 2 | | Harz n. Bsp. 3 | | Harz n. Bsp. 4 | | Vgl.-bsp. 1 | | Vgl.-bsp. 2 | |
|---|---|---|---|---|---|---|---|---|---|---|---|---|
| Trübungszeit (min) | 5 | 4 | 5 | 4 | 5 | 4 | 5 | 4 | 5 | 4 | 5 | 4 |
| Rißverhalten (nach Anbohrung) | 0 | 1 | 0 | 0 | 0 | 0 | 0 | 0 | 6 | 6 | 2 | 3 |
| Härtung | 2 | | 2 | | 3 | | 2 | | 2 | | 2 | |
| Wasserdampftest | keine Veränderung | | keine Veränderung | | keine Veränderung | | keine Veränderung | | keine Veränderung | | Glanzabnahme | |
| Kochtest | keine Blasen | | keine Blasen | | keine Blasen | | keine Blasen | | keine Blasen | | vereinzelt Bläschen | |

### Nachformbare Laminate

### Herstellung der Imprägnierflotten

Die jeweils verwendeten Harzlösungen wurden mit Wasser auf einen Feststoffgehalt von 50 Gew.-% eingestellt und anschließend mit soviel einer 85 gew.-%igen wäßrigen Lösung von N-Methylethanolamin/Ethanolamin/SO₂ als Härter versetzt, daß die Harzflotte eine Trübungszeit von 6,5 min aufwies. Außerdem wurden 0,3 Gew.-%, bezogen auf die Harzlösung, eines handelsüblichen Alkylphenolethoxylat-Netzmittel zugegeben.

### Herstellung der Laminate

Zwei Natronkraftpapiere (Flächengewicht 135 g/m²) und ein bedrucktes Dekorpapier (Flächengewicht 80 g/m²) wurden imprägniert. Der Harzauftrag bei den Natronkraftpapieren betrug 100 Gew.-%, bei dem Dekorpapier 120 Gew.-%, jeweils bezogen auf das Papiergewicht. In beiden Fällen wurde durch Trocknung bei 140°C ein Restfeuchte-Gehalt von 6,5 Gew.-% eingestellt. Die Papiere wurden bei 165°C und 50 bar innerhalb von 30 s zu einem Schichtstoff gepreßt, wobei das Dekorpapier die Deckschicht bildete.

### Prüfungsergebnisse:

**Tabelle II**

| | Laminat aus Harz n. Bsp. 2 | Laminat aus Harz n. Bsp. 3 | Vergleichsbeispiel 2 |
|---|---|---|---|
| Nachformbarkeit (Note) | 1-2 | 1 | 3 |
| Härtung | 2 | 3 | 2 |
| Kochtest | keine Blasen | keine Blasen | vereinzelt Bläschen |

## Patentansprüche

1. Wäßrige Tränkharze, enthaltend
(A) ein Kondensationsprodukt aus
(A₁) 1 mol Melamin,
(A₂) 1,3 bis 2,5 mol Formaldehyd
(A₃) 0 bis 0,1 mol Harnstoff,
und
(B) 0,1 bis 20 Gew.-%, bezogen auf die Menge der Komponenten (A₁), (A₂) und (A₃), eines wasserlöslichen oder wasserdispergierbaren alkoxilierten Polyamids.

2. Wäßrige Tränkharze nach Anspruch 1, enthaltend ein alkoxiliertes Polyamid, dessen Polyamid-Anteil ein mittleres Molekulargewicht Mₙ von 2000 bis 45000 aufweist.

3. Verfahren zur Herstellung von imprägnierten Papieren, wie sie für die Oberflächenbeschichtung eingesetzt werden, durch Tränken der Papiere mit einem wäßrigen Harz auf Basis von Melamin-Formaldehyd-Kondensaten, dadurch gekennzeichnet, daß man die Papiere mit einem Tränkharz, gemäß Anspruch 1 oder 2 imprägniert.

4. Imprägnierte Papiere, erhältlich nach dem Verfahren gemäß Anspruch 3.

5. Verwendung von imprägnierten Papieren gemäß Anspruch 4 zur Herstellung von Oberflächenbeschichtungen.
